# EUROPEAN PATENT APPLICATION

(11) **EP 2 605 104 A2**
(43) Date of publication of application: **19.06.2013**
(21) Application number: 12167133.3
(22) Date of filing: 08.05.2012
(51) Int. Cl.: G06F 1/18

(54) **Digital set-top unit**

(30) Priority: 13.12.2011 TW 100146029
(71) Applicant: Askey Technology (Jiangsu) Ltd., Economic-Technological Development Area Wujiang Jiangsu (CN); Askey Computer Corp., New Taipei City 235 (TW)
(72) Inventor: Chou, Chih-Yung, New Taipei City 237 (TW); Hsu, Jung-Jen, New Taipei City 235 (TW); Hsieh, Ching-Feng, Taipei City 108 (TW)
(74) Representative: Bonvicini, Davide

(57) **Abstract**

A digital set-top unit capable of expansion includes a first body and a second body. The first body has a first casing, a first expansion circuit substrate, and a first circuit substrate. The first casing has a first coupling side and a second coupling side. The second body has a second casing, a second expansion circuit substrate, and a second circuit substrate. The second casing has a third coupling side and a fourth coupling side. The first body and the second body are coupled together by the coupling sides of the first and second casings, such that the first expansion circuit substrate and the second expansion circuit substrate are electrically connected, allowing the first circuit substrate and the second circuit substrate to be electrically connected to each other. The digital set-top unit can be progressively expanded as needed and features unabated structural integrity and ease of use after expansion.

## Description

### FIELD OF THE INVENTION

The present invention relates to digital set-top units, and more particularly, to a digital set-top unit capable of expansion.

### BACKGROUND OF THE INVENTION

Due to the ubiquity of electronic devices of today, people nowadays receive information through various channels, such as radios, computers, mobile phones, or TV. Among the aforesaid channels, TV is in the widest use. Through TV, people not only gain access to a wide variety of information but can also be engaged in entertainment. To this end, TV users equip their TV sets with various set-top boxes as needed, such as set-top boxes for digital TV, set-top boxes for computer games, set-top boxes for DVD, set-top boxes for connection to the Internet, or set-top boxes for camcorders. However, the aforesaid set-top boxes have their own drawbacks. A TV set always looks untidy in the presence of a set-top box. Different set-top boxes are equipped with dedicated controllers (remote controllers), respectively, and thus lack ease of use. A set-top box is not capable of expansion and thus cannot meet users' needs.

Accordingly, it is imperative to devise a digital set-top unit capable of being progressively expanded as needed and characterized by unabated structural integrity and ease of use after the expansion.

### SUMMARY OF THE INVENTION

In view of the aforesaid drawbacks of the prior art, the inventor of the present invention conceives room for improvement in the prior art and thus conducted extensive researches and experiments according to the inventor's years of experience in the related industry, and finally developed a digital set-top unit as disclosed in the present invention. The digital set-top unit of the present invention is capable of being progressively expanded as needed and characterized by unabated structural integrity and ease of use after the expansion.

In order to achieve the above and other objectives, the first aspect of the present invention provides a first body of a digital set-top unit. The first body comprises: a first casing having a fifth opening, a first coupling side, and a second coupling side, the first coupling side having a first coupling portion and a first opening, and the second coupling side having a second coupling portion and a second opening; a first expansion circuit substrate disposed in the first casing and having a first electrical connection unit and a second electrical connection unit which are exposed from the first opening and the second opening of the first casing, respectively; and a first circuit substrate disposed in the first casing, electrically connected to the first expansion circuit substrate, and having a first processing unit and a first transmitting unit, the first processing unit being electrically connected to the first expansion circuit substrate, and the first transmitting unit being electrically connected to the first processing unit and exposed from the fifth opening of the first casing.

The second aspect of the present invention provides a second body of a digital set-top unit. The second body comprises: a second casing having a third coupling side and a fourth coupling side, the third coupling side having a third coupling portion and a third opening, and the fourth coupling side having a fourth coupling portion and a fourth opening; a second expansion circuit substrate disposed in the second casing and having a third electrical connection unit and a fourth electrical connection unit, wherein the third electrical connection unit and the fourth electrical connection unit are exposed from the third opening and the fourth opening of the second casing, respectively; and a second circuit substrate disposed in the second casing, electrically connected to the second expansion circuit substrate, and having a second processing unit and an electronic unit, the second processing unit being electrically connected to the second expansion circuit substrate, and the electronic unit being electrically connected to the second processing unit.

The third aspect of the present invention provides a digital set-top unit comprising: a first body comprising a first casing, a first expansion circuit substrate disposed in the first casing, and a first circuit substrate electrically connected to the first expansion circuit substrate, the first casing having a fifth opening, a first coupling side, and a second coupling side, the first coupling side having a first coupling portion, the second coupling side having a second coupling portion, the first circuit substrate having a first transmitting unit exposed from the fifth opening of the first casing; and a second body comprising a second casing, a second expansion circuit substrate disposed in the second casing, and a second circuit substrate electrically connected to the second expansion circuit substrate, the second casing having a third coupling side and a fourth coupling side, the third coupling side having a third coupling portion, the fourth coupling side having a fourth coupling portion, thereby allowing the first body and the second body to be coupled together by the first coupling portion, the second coupling portion, the third coupling portion, and the fourth coupling portion.

Accordingly, the digital set-top unit of the present invention is capable of being progressively expanded as needed and characterized by unabated structural integrity and ease of use after the expansion.

### BRIEF DESCRIPTION OF THE DRAWINGS

Objectives, features, and advantages of the present invention are hereunder illustrated with specific embodiments in conjunction with the accompanying drawings, in which:
FIG. 1 is a schematic exploded view of a first body of a digital set-top unit according to a specific embodiment of the present invention;
FIG. 2 is another schematic exploded view of the first body according to a specific embodiment of the present invention;
FIG. 3 is a schematic assembled view of the first body according to a specific embodiment of the present invention;
FIG. 4 is another schematic assembled view of the first body according to a specific embodiment of the present invention;
FIG. 5 is a schematic exploded view of a second body of a digital TV set-top unit according to a specific embodiment of the present invention;
FIG. 6 is another schematic exploded view of the second body according to a specific embodiment of the present invention;
FIG. 7 is a schematic assembled view of the second body according to a specific embodiment of the present invention;
FIG. 8 is another schematic assembled view of the second body according to a specific embodiment of the present invention;
FIG. 9 is a schematic exploded view of a second body for use with a hard disk drive according to a specific embodiment of the present invention;
FIG. 10 is another schematic exploded view of the second body for use with a hard disk drive according to a specific embodiment of the present invention;
FIG. 11 is a schematic assembled view of the second body for use with a hard disk drive according to a specific embodiment of the present invention;
FIG. 12 is another schematic assembled view of the second body for use with a hard disk drive according to a specific embodiment of the present invention;
FIG. 13 is a schematic exploded view of a digital set-top unit according to a specific embodiment of the present invention; and
FIG. 14 is a schematic assembled view of the digital set-top unit according to a specific embodiment of the present invention.

### DETAILED DESCRIPTION OF THE PREFERRED EMBODIMENTS

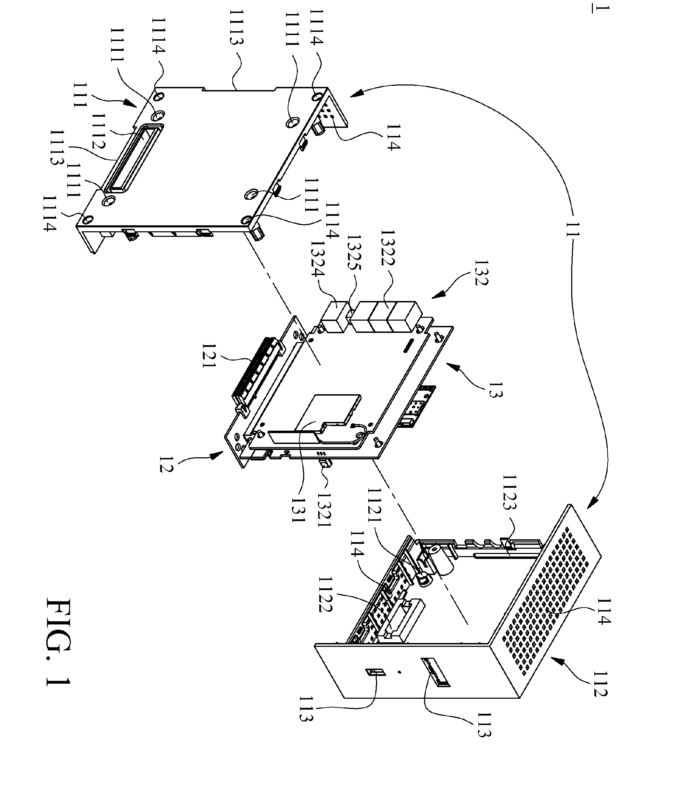

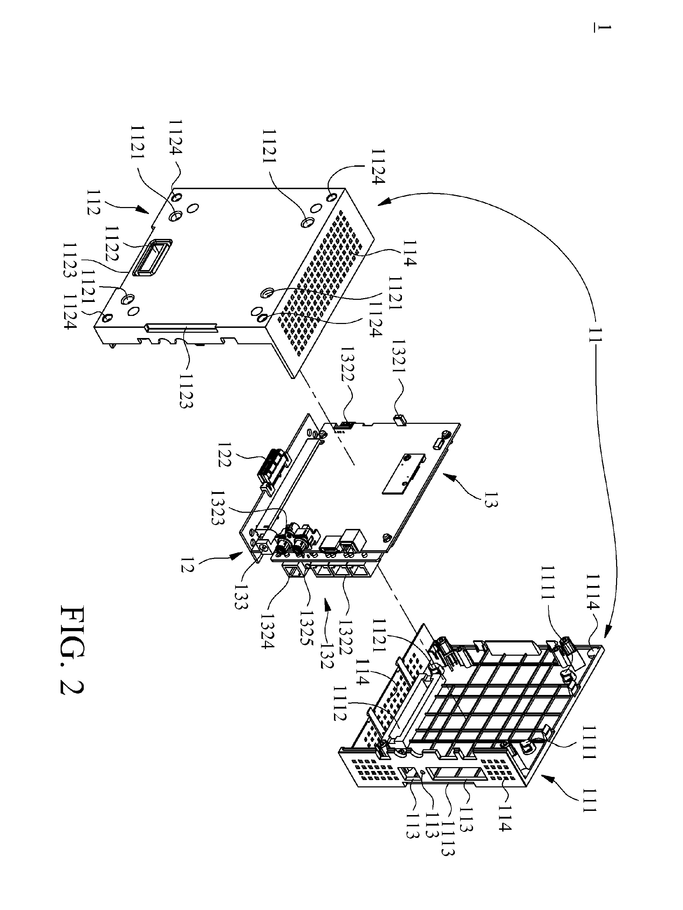

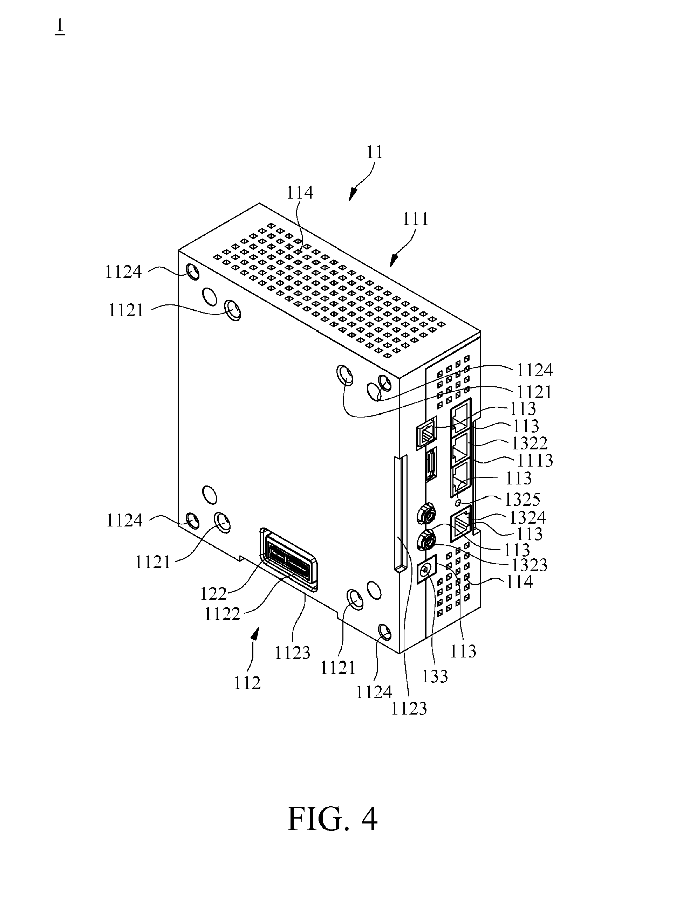

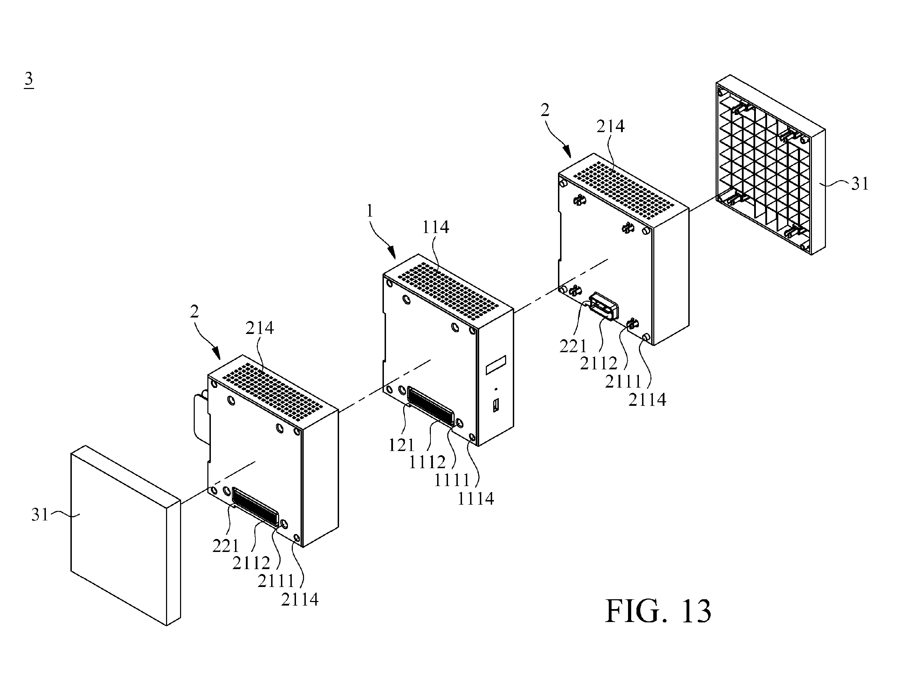

Referring to FIG. 1 through FIG. 4, there are shown two schematic exploded views and two schematic assembled views of a first body of a digital set-top unit according to a specific embodiment of the present invention. As shown in the drawings, the first aspect of the present invention provides a first body 1 of a digital set-top unit. The first body 1 comprises a first casing 11, a first expansion circuit substrate 12, and a first circuit substrate 13. The first casing 11 has at least two parallel sides; preferably, the first casing 11 is of a rectangular shape or a cubic shape. The first casing 11 has a fifth opening 113, a first coupling side 111, and a second coupling side 112. The first coupling side 111 has a first coupling portion 1111 and a first opening 1112. The second coupling side 112 parallels the first coupling side 111 and has a second coupling portion 1121 and a second opening 1122. The first body 1 can be coupled to a second body 2 (see FIG. 13) of the digital set-top unit by the first coupling portion 1111 and the second coupling portion 1121. The first expansion circuit substrate 12 is disposed in the first casing 11 and has a first electrical connection unit 121 and a second electrical connection unit 122. The first electrical connection unit 121 and the second electrical connection unit 122 are exposed from the first opening 1112 and the second opening 1122 of the first casing 11, respectively, and electrically connected to the second body 2 of the digital set-top unit (see FIG. 13). The first circuit substrate 13 is disposed in the first casing 11 and electrically connected to (either by being inserted into or without being inserted into) the first expansion circuit substrate 12. The first circuit substrate 13 has a first processing unit 131, a first transmitting unit 132, and a power unit 133. The first processing unit 131 is electrically connected to the first expansion circuit substrate 12. The power unit 133 and the first transmitting unit 132 are electrically connected to the first processing unit 131 and exposed from the fifth opening 113 of the first casing 11. Hence, the digital set-top unit of the present invention is **characterized in that** the first body 1 and the second body 2 are coupled together by means of the first coupling portion 1111 of the first coupling side 111, the second coupling portion 1121 of the second coupling side 112, as well as the first electrical connection unit 121 and the second electrical connection unit 122 of the first expansion circuit substrate 12 (in a manner to be described in detail later), such that the digital set-top unit can be progressively expanded as needed by adding at least one said second body 2 to both sides of the first body 1 and allowing the power supply to the digital set-top unit to be solely supplied by the first body 1. Therefore, the digital set-top unit of the present invention is capable of being progressively expanded as needed and characterized by unabated structural integrity and ease of use after the expansion.

The first casing 11 has a plurality of heat dissipation pores 114 located outside the first coupling side 111 and the second coupling side 112 (such as on the top side, the bottom side, and/or the rear side) for enhancing the operation performance of the first body 1 of the digital set-top unit.

Disassembly recesses 1113, 1123 are disposed in the vicinity of the rear edge or the bottom edge of the first coupling side 111 and in the vicinity of the rear edge or the bottom edge of the second coupling side 112 of the first casing 11. A user can apply a force to the disassembly recesses 1113, 1123 to thereby separate the first body 1 and the second body 2 of the digital set-top unit conveniently. To this end, the user puts two of his or her fingertips in the disassembly recesses 1113, 1123 and exerts opposite forces thereon, respectively, to separate the first body 1 and the second body 2 of the digital set-top unit.

The first coupling side 111 has a first positioning unit 1114. The second coupling side 112 has a second positioning unit 1124. The first positioning unit 1114 and the second positioning unit 1124 together enable the coupling of the first body 1 and the second body 2 of the digital set-top unit (see FIG. 13). The coupling of the first body 1 and the second body 2 of the digital set-top unit is effectuated by aligning the second body 2 with the first body 1 by means of the first positioning unit 1114 or the second positioning unit 1124 of the first body 1 and then coupling the first coupling portion 1111 or the second coupling portion 1121 of the first body 1 to the second body 2.

The first positioning unit 1114 and the second positioning unit 1124 are each a positioning post or a positioning recess. When the first positioning unit 1114 or the second positioning unit 1124 of the first body 1 of the digital set-top unit is a positioning post, the second body 2 of the digital set-top unit has a positioning recess corresponding in position and shape to the positioning post of the first body 1. When the first positioning unit 1114 or the second positioning unit 1124 of the first body 1 of the digital set-top unit is a positioning recess, the second body 2 of the digital set-top unit has a positioning post corresponding in position and shape to the positioning recess of the first body 1. Although two aforesaid scenarios are described above, only the latter scenario is shown in the drawings.

The first coupling portion 1111 and the second coupling portion 1121 are each a resilient hook or an engaging hole. When the first coupling portion 1111 or the second coupling portion 1121 of the first body 1 of the digital set-top unit is a resilient hook, the second body 2 of the digital set-top unit has an engaging hole corresponding in position and shape to the resilient hook of the first body 1. When the first coupling portion 1111 or the second coupling portion 1121 of the first body 1 of the digital set-top unit is an engaging hole, the second body 2 of the digital set-top unit has a resilient hook corresponding in position and shape to an engaging hole of the first body 1. Although two aforesaid scenarios are described above, only the latter scenario is shown in the drawings.

The first electrical connection unit 121 and the second electrical connection unit 122 are each a male connector or a female connector. When the first electrical connection unit 121 or the second electrical connection unit 122 of the first body 1 of the digital set-top unit is a male connector, the second body 2 of the digital set-top unit has a female connector corresponding in position and shape to the male connector of the first body 1. When the first electrical connection unit 121 or the second electrical connection unit 122 of the first body 1 of the digital set-top unit is a female connector, the second body 2 of the digital set-top unit has a male connector corresponding in position and shape to the female connector of the first body 1. Although two aforesaid scenarios are described above, only the latter scenario is shown in the drawings.

The first transmitting unit 132 is a remote control receiver 1321, a data transmission connector 1322, an audio video transmission connector 1323, a network transmission connector 1324, or an infrared transceiver 1325.

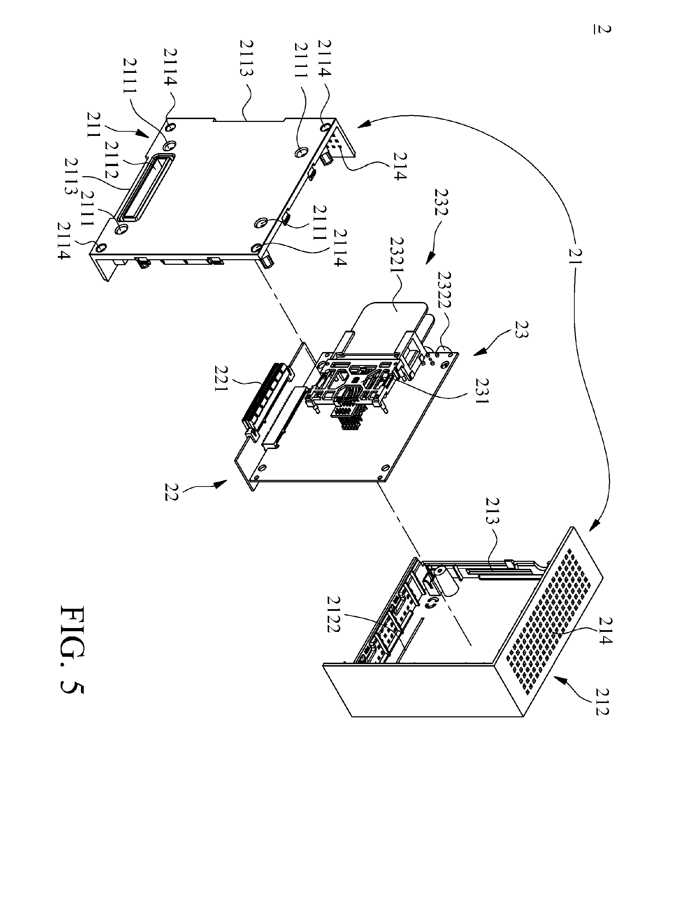

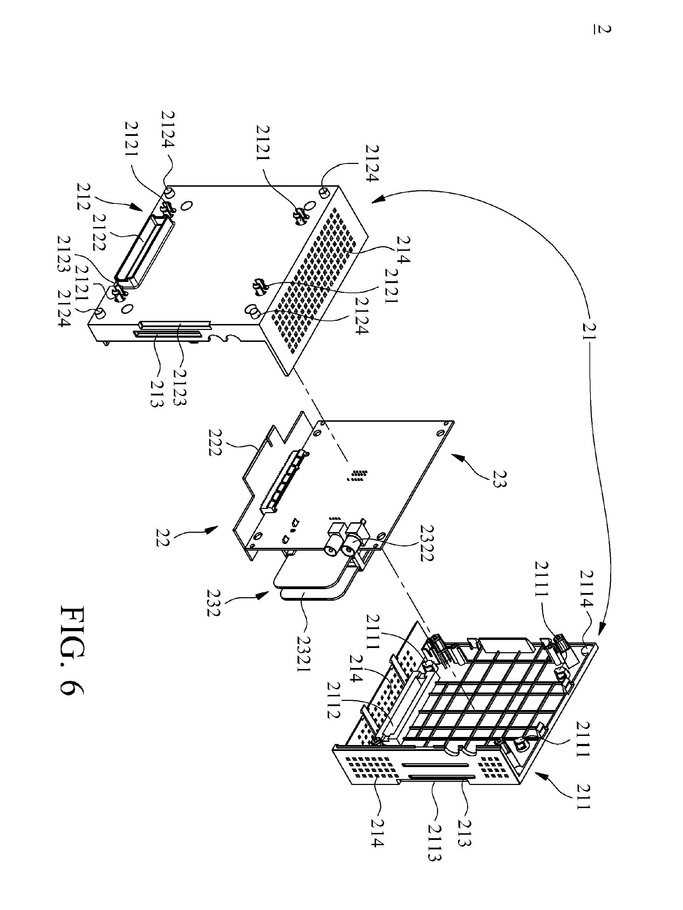

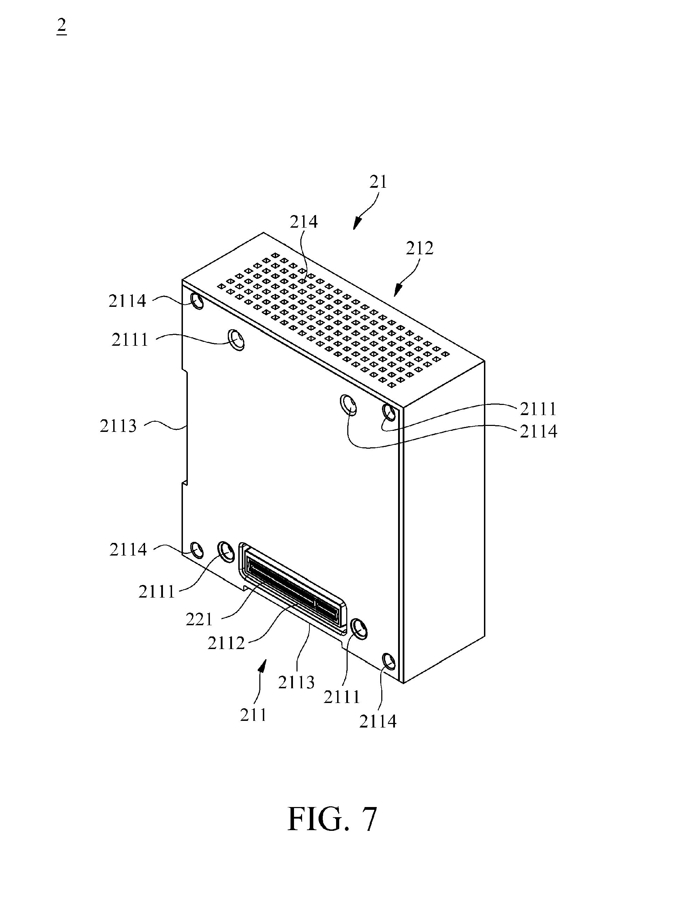

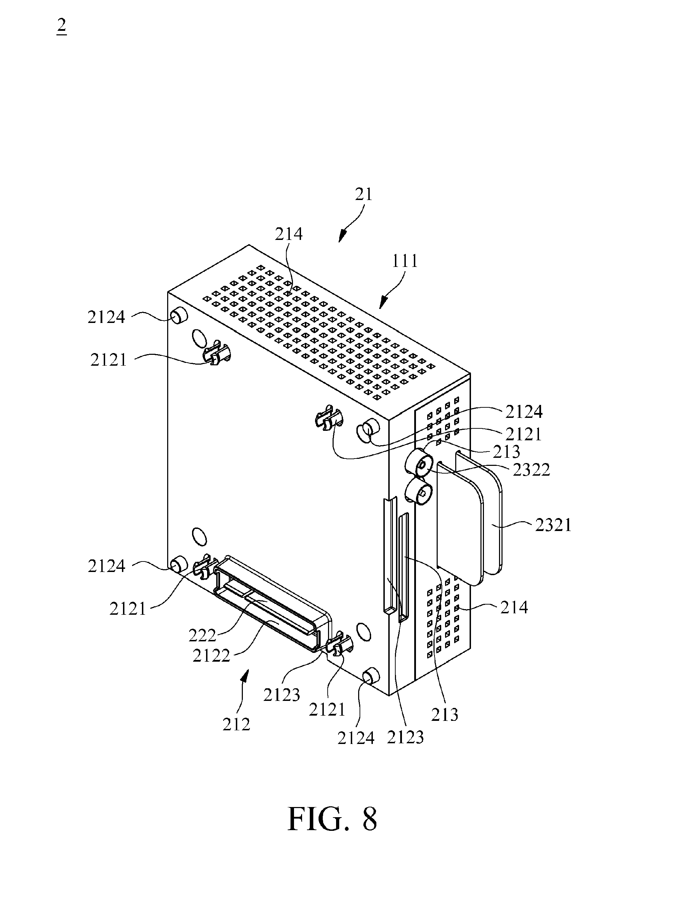

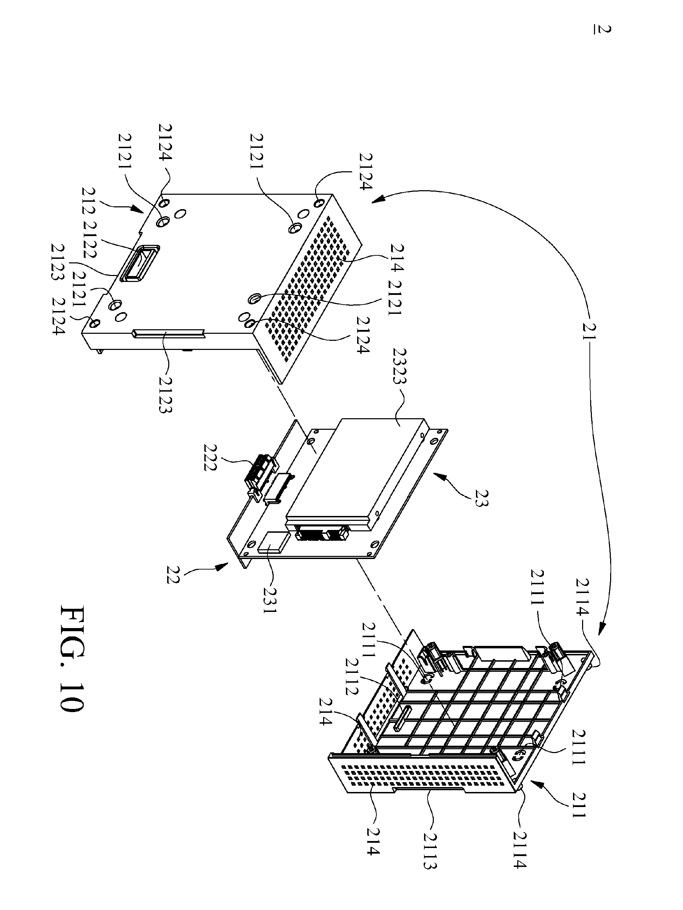

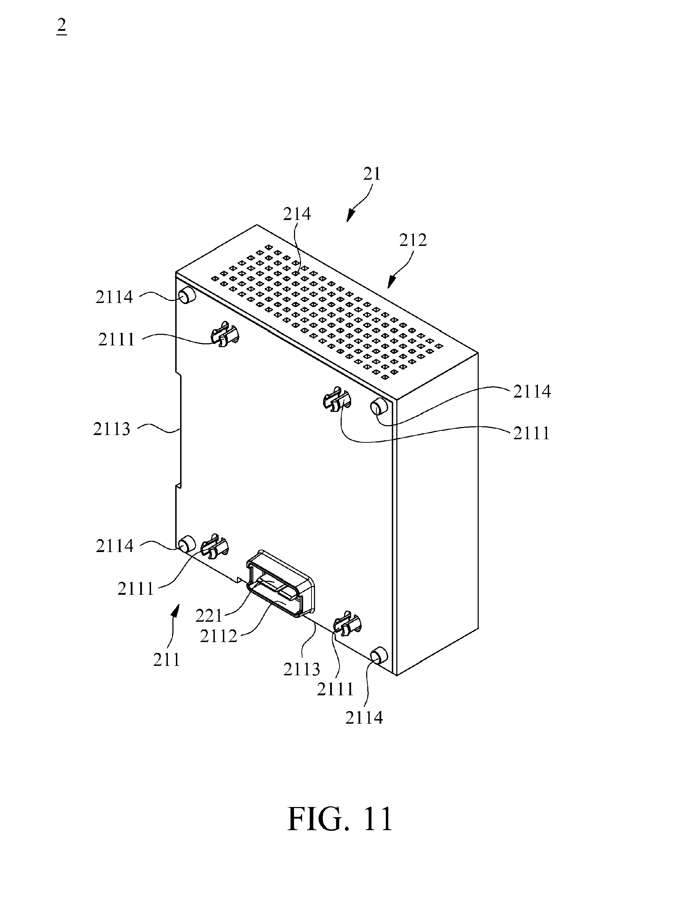

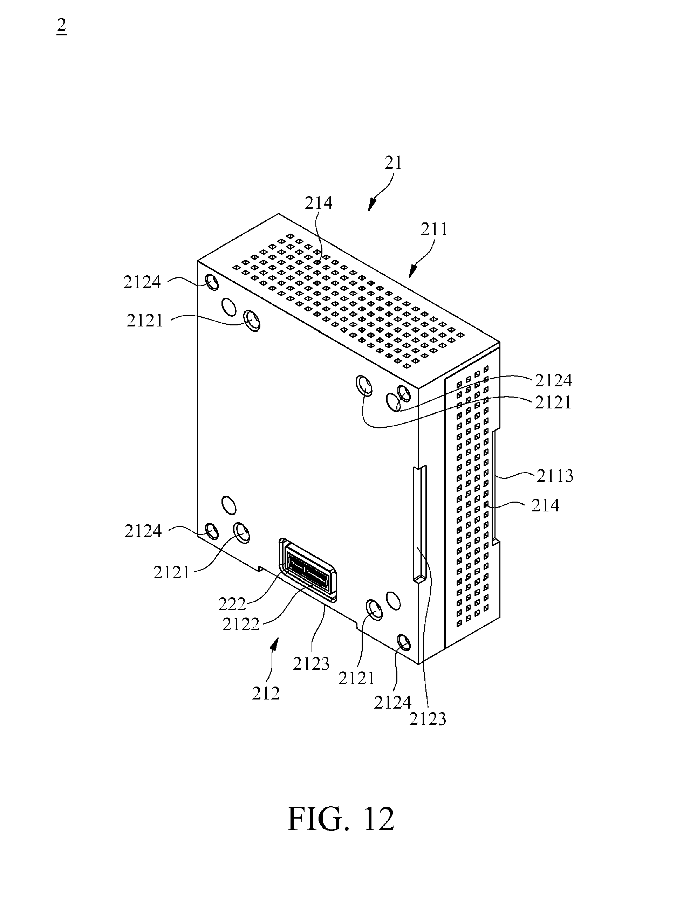

FIG. 5 through FIG. 12, there are shown two schematic exploded views and two schematic assembled views of a second body of a digital TV set-top unit according to a specific embodiment of the present invention, as well as two schematic exploded views and two schematic assembled views of a second body of a hard disk drive set-top unit according to a specific embodiment of the present invention. As shown in the drawings, the second aspect of the present invention provides the second body 2 of a digital TV set-top unit, and the second body 2 comprises a second casing 21, a second expansion circuit substrate 22, and a second circuit substrate 23. The second casing 21 has at least two parallel sides; preferably, the second casing 21 is of a rectangular shape or a cubic shape. The second casing 21 has a third coupling side 211 and a fourth coupling side 212. The third coupling side 211 has a third coupling portion 2111 and a third opening 2112. The fourth coupling side 212 parallels the third coupling side 211 and has a fourth coupling portion 2121 and a fourth opening 2122. Referring to FIG. 13, the third coupling portion 2111 of the second body 2 is coupled to the first body 1, or alternatively the third coupling portion 2111 of the second body 2 is coupled to another second body (not shown) immediately adjacent thereto. The fourth coupling portion 2121 of the second body 2 is coupled to another second body (not shown) immediately adjacent thereto. The second expansion circuit substrate 22 is disposed in the second casing 21. The second expansion circuit substrate 22 has a third electrical connection unit 221 and a fourth electrical connection unit 222. The third electrical connection unit 221 and the fourth electrical connection unit 222 are exposed from the third opening 2112 and the fourth opening 2122 of the second casing 21, respectively. Referring to FIG. 13, the third electrical connection unit 221 of the second body 2 is electrically connected to the first body 1, or alternatively the third electrical connection unit 221 of the second body 2 is electrically connected to another second body (not shown) immediately adjacent thereto. The fourth electrical connection unit 222 is electrically connected to the another second body (not shown). The second circuit substrate 23 is disposed in the second casing 21 and electrically connected to (either by being inserted into or without being inserted into) the second expansion circuit substrate 22. The second circuit substrate 23 has a second processing unit 231 and an electronic unit 232. The second processing unit 231 is electrically connected to the second expansion circuit substrate 22. The electronic unit 232 is electrically connected to the second processing unit 231. Hence, regarding the digital set-top unit of the present invention, the second body 2 and the first body 1 of the digital set-top unit are coupled together by means of the third coupling portion 2111 of the third coupling side 211, the fourth coupling portion 2121 of the fourth coupling side 212, as well as the third electrical connection unit 221 and the fourth electrical connection unit 222 of the second expansion circuit substrate 22 (in a manner to be described in detail later), such that the digital set-top unit can be progressively expanded as needed by adding at least one said second body 2 to both sides of the first body 1 and allowing the power supply to the digital set-top unit to be solely supplied by the first body 1. Therefore, the digital set-top unit of the present invention is capable of being progressively expanded as needed and characterized by unabated structural integrity and ease of use after the expansion.

Referring to FIG. 5 through FIG. 8, a plurality of sixth openings 213 is disposed on the rear side of the second casing 21, and the electronic unit 232 comprises a digital antenna 2321 and an audio video transmission connector 2322. The digital antenna 2321 and the audio video transmission connector 2322 are electrically connected to the second processing unit 231. The digital antenna 2321 and the audio video transmission connector 2322 are exposed from the sixth openings 213 of the second casing 21. Hence, regarding the digital set-top unit of the present invention, the second body 2 enables the first body 1 to expand and enhance the digital TV capability thereof, whereas the operation of the digital set-top unit is under the sole control of the first body 1.

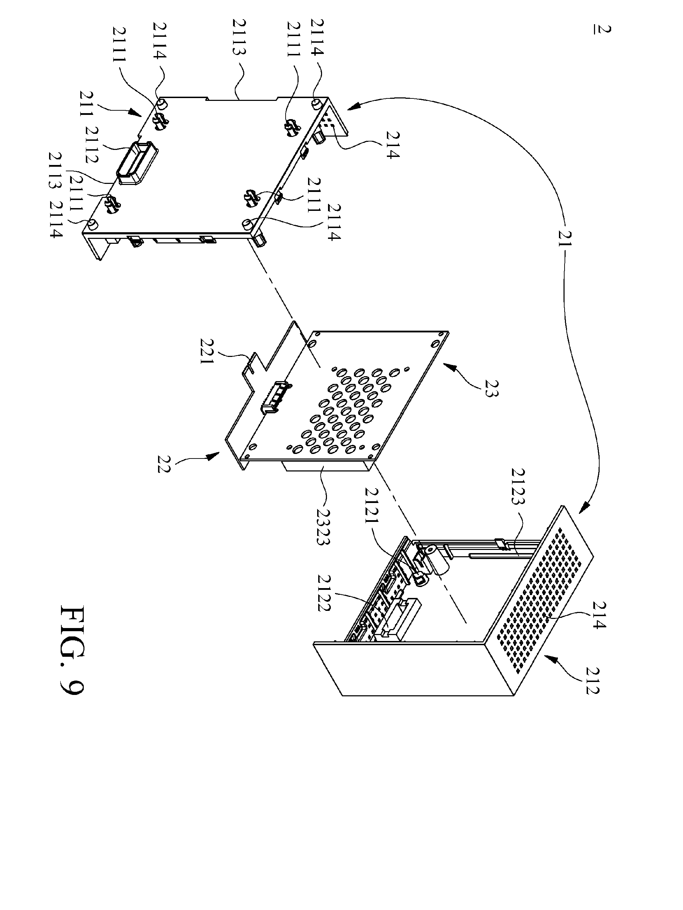

Referring to FIG. 9 through FIG. 12, the electronic unit 232 has a hard disk drive 2323. The hard disk drive 2323 is electrically connected to the second processing unit 231. Hence, the second body 2 of the digital set-top unit of the present invention enables the first body 1 of the digital set-top unit to expand and access additional space and be solely in charge of the operation of the digital set-top unit of the present invention.

The second casing 21 has a plurality of heat dissipation pores 214 located outside the third coupling side 211 and the fourth coupling side 212 (such as on the top side, the bottom side, and/or the rear side) for enhancing the operation performance of the second body 2 of the digital set-top unit.

Disassembly recesses 2113, 2123 are disposed in the vicinity of the rear edge or the bottom edge of the third coupling side 211 and in the vicinity of the rear edge or the bottom edge of the fourth coupling side 212 of the second casing 21. The user can apply a force to the disassembly recesses 2113, 2123 to thereby separate the first body 1 and the second body 2 of the digital set-top unit conveniently. To this end, the user puts two of his or her fingertips in the disassembly recesses 2113, 2123 and exerts opposite forces thereon, respectively, to separate the first body 1 and the second body 2 of the digital set-top unit.

The third coupling side 211 has a third positioning unit 2114. The fourth coupling side 212 has a fourth positioning unit 2124. The third positioning unit 2114 is coupled to the first body 1 or another second body (not shown) immediately adjacent to the second body 2 (see FIG. 13). The fourth positioning unit 2124 is coupled to another second body (not shown) immediately adjacent to the second body 2 (see FIG. 13). To couple the second body 2 to the first body 1, the user aligns the second body 2 with the first body 1 by means of the third positioning unit 2114 or the fourth positioning unit 2124 and then couples the second body 2 to the first body 1 by means of the third coupling portion 2111 or the fourth coupling portion 2121.

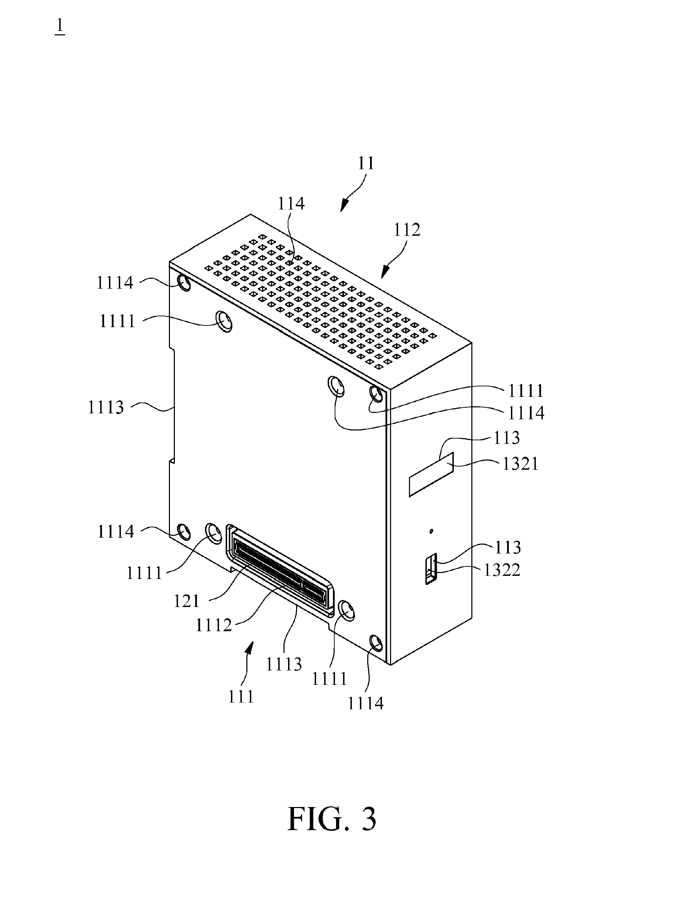

The third positioning unit 2114 and the fourth positioning unit 2124 are each a positioning post or a positioning recess. Referring to FIG. 3, FIG. 4, FIG. 9 through FIG. 13, when the fourth positioning unit 2124 of the second body 2 of the digital set-top unit is a positioning post, the first body 1 of the digital set-top unit has a positioning recess corresponding in position and shape to the positioning post of the second body 2. When the third positioning unit 2114 of the second body 2 of the digital set-top unit is a positioning recess, another second body (not shown) immediately adjacent to the second body 2 of the digital set-top unit has a positioning post corresponding in position and shape to the positioning recess of the second body 2. Referring to FIG. 3, FIG. 4, FIG. 9 through FIG. 13, when the third positioning unit 2114 of the second body 2 of the digital set-top unit is a positioning post, the first body 1 of the digital set-top unit has a positioning recess corresponding in position and shape to the positioning post of the second body 2. When the fourth positioning unit 2124 of the second body 2 of the digital set-top unit is a positioning recess, another second body (not shown) immediately adjacent to the second body 2 of the digital set-top unit has a positioning post corresponding in position and shape to the positioning recess of the second body 2.

The third coupling portion 2111 and the fourth coupling portion 2121 are each a resilient hook or an engaging hole. Referring to FIG. 3 through FIG. 8, and FIG. 13, when the fourth coupling portion 2121 of the second body 2 of the digital set-top unit is a resilient hook, the first body 1 of the digital set-top unit has an engaging hole corresponding in position and shape to the resilient hook of the second body 2. When the third coupling portion 2111 of the second body 2 of the digital set-top unit is an engaging hole, another second body (not shown) immediately adjacent to the second body 2 of the digital set-top unit has a resilient hook corresponding in position and shape to the engaging hole of the second body 2. Referring to FIG. 3, FIG. 4, FIG. 9 through FIG. 13, when the third coupling portion 2111 of the second body 2 of the digital set-top unit is a resilient hook, the first body 1 of the digital set-top unit has an engaging hole corresponding in position and shape to the resilient hook of the second body 2. When the fourth coupling portion 2121 of the second body 2 of the digital set-top unit is an engaging hole, another second body (not shown) immediately adjacent to the second body 2 of the digital set-top unit has a resilient hook corresponding in position and shape to the engaging hole of the second body 2.

The third electrical connection unit 221 and the fourth electrical connection unit 222 are each a male connector or a female connector. Referring to FIG. 3 through FIG. 8, and FIG. 13, when the fourth electrical connection unit 222 of the second body 2 of the digital set-top unit is a male connector, the first body 1 of the digital set-top unit has a female connector corresponding in position and shape to the male connector of the second body 2. When the third electrical connection unit 221 of the second body 2 of the digital set-top unit is a female connector, another second body (not shown) immediately adjacent to the second body 2 of the digital set-top unit has a male connector corresponding in position and shape to the female connector of the second body 2. Referring to FIG. 3, FIG. 4, FIG. 9 through FIG. 12, and FIG. 13, when the fourth electrical connection unit 222 of the second body 2 of the digital set-top unit is a female connector, another second body (not shown) immediately adjacent to the second body 2 of the digital set-top unit has a male connector corresponding in position and shape to the female connector of the second body 2. When the third electrical connection unit 221 of the second body 2 of the digital set-top unit is a male connector, the first body 1 of the digital set-top unit has a female connector corresponding in position and shape to the male connector of the second body 2.

The third coupling portion 2111 is coupled to the first body 1 or coupled to another second body (not shown) immediately adjacent to the second body 2 (see FIG. 9 through FIG. 13). The fourth coupling portion 2121 is coupled to another second body (not shown) immediately adjacent to the second body 2 or coupled to a lateral decoration panel 31 (see FIG. 9 through FIG. 13). The fourth coupling portion 2121 is coupled to the first body 1 or coupled to another second body (not shown) immediately adjacent to the second body 2 (see FIG. 5 through FIG. 8 and FIG. 13). The third coupling portion 2111 is coupled to another second body (not shown) immediately adjacent to the second body 2 or coupled to the lateral decoration panel 31 (see FIG. 5 through FIG. 8 and FIG. 13). The coupling of the lateral decoration panel 31 and the third coupling portion 2111 or the fourth coupling portion 2121 can also be effectuated by aligning the positioning post with the positioning recess of the second body 2 and then engaging the resilient hook with the engaging hole of the second body 2.

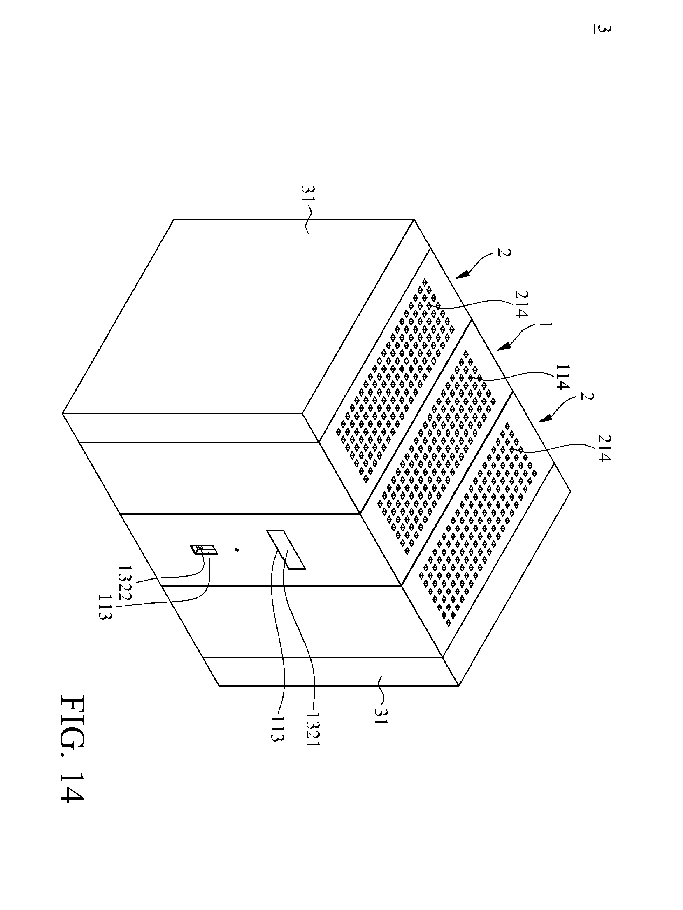

Referring to FIG. 13 and FIG. 14, there are shown a schematic exploded view and a schematic assembled view of the digital set-top unit according to a specific embodiment of the present invention. Referring to FIG. 1 through FIG. 14, the third aspect of the present invention provides a digital set-top unit 3 essentially comprising the first body 1 and the second body 2. The first body 1 comprises the first casing 11, the first expansion circuit substrate 12, and the first circuit substrate 13. The first casing 11 has at least two parallel sides; preferably, the first casing 11 is of a rectangular shape or a cubic shape. The first casing 11 has the fifth opening 113, the first coupling side 111 and the second coupling side 112. The first coupling side 111 has the first coupling portion 1111 and the first opening 1112. The second coupling side 112 parallels the first coupling side 111 and has the second coupling portion 1121 and the second opening 1122. The first expansion circuit substrate 12 is disposed in the first casing 11. The first expansion circuit substrate 12 has the first electrical connection unit 121 and the second electrical connection unit 122. The first electrical connection unit 121 and the second electrical connection unit 122 are exposed from the first opening 1112 and the second opening 1122 of the first casing 11, respectively. The first circuit substrate 13 is disposed in the first casing 11. The first circuit substrate 13 is electrically connected to (either by being inserted into or without being inserted into) the first expansion circuit substrate 12. The first circuit substrate 13 has the first processing unit 131, the first transmitting unit 132, and the power unit 133. The first processing unit 131 is electrically connected to the first expansion circuit substrate 12. The power unit 133 and the first transmitting unit 132 are electrically connected to the first processing unit 131 and exposed from the fifth opening 113 of the first casing 11. The second body 2 comprises the second casing 21, the second expansion circuit substrate 22, and the second circuit substrate 23. The second casing 21 has at least two parallel sides; preferably, the second casing 21 is of a rectangular shape or a cubic shape. The second casing 21 has the third coupling side 211 and the fourth coupling side 212. The third coupling side 211 has the third coupling portion 2111 and the third opening 2112. The fourth coupling side 212 parallels the third coupling side 211 and has the fourth coupling portion 2121 and the fourth opening 2122. The third coupling portion 2111 is coupled to the first coupling portion 1111 of the first body 1, the second coupling portion 1121 of the first body 1, another third coupling portion (not shown) of another second body (not shown) immediately adjacent to the second body 2, or another fourth coupling portion (not shown) of another second body (not shown) immediately adjacent to the second body 2. The fourth coupling portion 2121 is coupled to another third coupling portion (not shown) of another second body (not shown) immediately adjacent to the second body 2 or another fourth coupling portion (not shown) of another second body (not shown) immediately adjacent to the second body 2. The second expansion circuit substrate 22 is disposed in the second casing 21. The second expansion circuit substrate 22 has the third electrical connection unit 221 and the fourth electrical connection unit 222. The third electrical connection unit 221 and the fourth electrical connection unit 222 are exposed from the third opening 2112 and the fourth opening 2122 of the second casing 21, respectively. The third electrical connection unit 221 is electrically connected to the first electrical connection unit 121 of the first body 1, the second electrical connection unit 122 of the first body 1, another third electrical connection unit (not shown) of another second body (not shown) immediately adjacent to the second body 2, or another fourth electrical connection unit (not shown) of another second body (not shown) immediately adjacent to the second body 2. The fourth electrical connection unit 222 is electrically connected to another third electrical connection unit (not shown) of another second body (not shown) immediately adjacent to the second body 2 or another fourth electrical connection unit (not shown) of another second body (not shown) immediately adjacent to the second body 2. The second circuit substrate 23 is disposed in the second casing 21. The second circuit substrate 23 is electrically connected to (either by being inserted into or without being inserted into) the second expansion circuit substrate 22. The second circuit substrate 23 has the second processing unit 231 and the electronic unit 232. The second processing unit 231 is electrically connected to the second expansion circuit substrate 22. The electronic unit 232 is electrically connected to the second processing unit 231. Hence, the first body 1 and the second body 2 of the digital set-top unit of the present invention can be coupled together, provided that the first coupling portion 1111 of the first coupling side 111, the second coupling portion 1121 of the second coupling side 112, as well as the first electrical connection unit 121 and the second electrical connection unit 122 of the first expansion circuit substrate 12 are coupled to the third coupling portion 2111 of the third coupling side 211, the fourth coupling portion 2121 of the fourth coupling side 212, as well as the third electrical connection unit 221 and the fourth electrical connection unit 222 of the second expansion circuit substrate 22, respectively, such that the digital set-top unit can be progressively expanded as needed by adding at least one said second body 2 to both sides of the first body 1 and allowing the power supply to the digital set-top unit to be solely supplied by the first body 1. Therefore, the digital set-top unit of the present invention is capable of being progressively expanded as needed and characterized by unabated structural integrity, the control exercised exclusively by the first body 1 over the operation of the digital set-top unit, and ease of use after the expansion.

The first casing 11 has a plurality of heat dissipation pores 114 located outside the first coupling side 111 and the second coupling side 112 (such as on the top side, the bottom side, and/or the rear side) for enhancing the operation performance of the first body 1 of the digital set-top unit. The second casing 21 has a plurality of heat dissipation pores 214 located outside the third coupling side 211 and the fourth coupling side 212 (such as on the top side, the bottom side, and/or the rear side) for enhancing the operation performance of the second body 2 of the digital set-top unit.

The disassembly recesses 1113, 1123 are disposed in the vicinity of the rear edge or the bottom edge of the first coupling side 111 and in the vicinity of the rear edge or the bottom edge of the second coupling side 112 of the first casing 11. The disassembly recesses 2113, 2123 are disposed in the vicinity of the rear edge or the bottom edge of the third coupling side 211 and in the vicinity of the rear edge or the bottom edge of the fourth coupling side 212 of the second casing 21. The user can apply a force to the disassembly recesses 1113, 1123, 2113, 2123 to thereby separate the first body 1 and the second body 2 of the digital set-top unit conveniently. To this end, the user puts two of his or her fingertips in the disassembly recesses 1113, 1123, 2113, 2123 and exerts opposite forces thereon, respectively, to separate the first body 1 and the second body 2 of the digital set-top unit.

The first coupling side 111 has the first positioning unit 1114. The second coupling side 112 has the second positioning unit 1124. The third coupling side 211 has the third positioning unit 2114. The fourth coupling side 212 has the fourth positioning unit 2124. The third positioning unit 2114 is engageable with the first positioning unit 1114 of the first body 1, the second positioning unit 1124 of the first body 1, another third positioning unit (not shown) of another second body (not shown) immediately adjacent to the second body 2, or another fourth positioning unit (not shown) of another second body (not shown) immediately adjacent to the second body 2. The fourth positioning unit 2124 is engageable with another third positioning unit (not shown) of another second body (not shown) immediately adjacent to the second body 2 or another fourth positioning unit (not shown) of another second body (not shown) immediately adjacent to the second body 2. To couple the second body 2 to the first body 1, the user aligns the third positioning unit 2114 or the fourth positioning unit 2124 of the second body 2 with the first positioning unit 1114 or the second positioning unit 1124 of the first body 1 and then couple the third coupling portion 2111 or the fourth coupling portion 2121 of the second body 2 with the first coupling portion 1111 or the second coupling portion 1121 of the first body 1, respectively.

The third positioning unit 2114 and the fourth positioning unit 2124 are each a positioning post or a positioning recess. Referring to FIG. 3 through FIG. 8, and FIG. 13, when the fourth positioning unit 2124 of the second body 2 of the digital set-top unit is a positioning post, the first positioning unit 1114 of the first body 1 of the digital set-top unit is a positioning recess corresponding in position and shape to the positioning post of the second body 2. When the third positioning unit 2114 of the second body 2 of the digital set-top unit is a positioning recess, another fourth positioning unit (not shown) of another second body (not shown) immediately adjacent to the second body 2 of the digital set-top unit is a positioning post corresponding in position and shape to the positioning recess of the second body 2. Referring to FIG. 3, FIG. 4, and FIG. 9 through FIG. 13, when the third positioning unit 2114 of the second body 2 of the digital set-top unit is a positioning post, the second positioning unit 1124 of the first body 1 of the digital set-top unit is a positioning recess corresponding in position and shape to the positioning post of the second body 2. When the fourth positioning unit 2124 of the second body 2 of the digital set-top unit is a positioning recess, another third positioning unit (not shown) of another second body (not shown) immediately adjacent to the second body 2 of the digital set-top unit is a positioning post corresponding in position and shape to the positioning recess of the second body 2.

The first coupling portion 1111, the second coupling portion 1121, the third coupling portion 2111, and the fourth coupling portion 2121 are each a resilient hook or an engaging hole. Referring to FIG. 3 through FIG. 8, and FIG. 13, when the fourth coupling portion 2121 of the second body 2 of the digital set-top unit is a resilient hook, the first coupling portion 1111 of the first body 1 of the digital set-top unit is an engaging hole corresponding in position and shape to the resilient hook of the second body 2. When the third coupling portion 2111 of the second body 2 of the digital set-top unit is an engaging hole, another fourth coupling portion (not shown) of another second body (not shown) immediately adjacent to the second body 2 of the digital set-top unit is a resilient hook corresponding in position and shape to the engaging hole of the second body 2. Referring to FIG. 3, FIG. 4, FIG. 9 through FIG. 13, when the third coupling portion 2111 of the second body 2 of the digital set-top unit is a resilient hook, the second coupling portion 1121 of the first body 1 of the digital set-top unit is an engaging hole corresponding in position and shape to the resilient hook of the second body 2. When the fourth coupling portion 2121 of the second body 2 of the digital set-top unit is an engaging hole, another third coupling portion (not shown) of another second body (not shown) immediately adjacent to the second body 2 of the digital set-top unit is a resilient hook corresponding in position and shape to the engaging hole of the second body 2.

The first electrical connection unit 121, the second electrical connection unit 122, the third electrical connection unit 221 and the fourth electrical connection unit 222 are each a male connector or a female connector. Referring to FIG. 3 through FIG. 8, and FIG. 13, when the fourth electrical connection unit 222 of the second body 2 of the digital set-top unit is a male connector, the first electrical connection unit 121 of the first body 1 of the digital set-top unit is a female connector corresponding in position and shape to the male connector of the second body 2. When the third electrical connection unit 221 of the second body 2 of the digital set-top unit is a female connector, another fourth electrical connection unit (not shown) of another second body (not shown) immediately adjacent to the second body 2 of the digital set-top unit is a male connector corresponding in position and shape to the female connector of the second body 2. Referring to FIG. 3, FIG. 4, FIG. 9 through FIG. 13, when the fourth electrical connection unit 222 of the second body 2 of the digital set-top unit is a female connector, another third electrical connection unit (not shown) of another second body (not shown) immediately adjacent to the second body 2 of the digital set-top unit is a male connector corresponding in position and shape to the female connector of the second body 2. When the third electrical connection unit 221 of the second body 2 of the digital set-top unit is a male connector, the second electrical connection unit 122 of the first body 1 of the digital set-top unit is a female connector corresponding in position and shape to the male connector of the second body 2.

Referring to FIG. 5 through FIG. 8, and FIG. 13, the third coupling portion 2111 is coupled to another fourth coupling portion (not shown) of another second body (not shown) immediately adjacent to the second body 2 or the lateral decoration panel 31, whereas the fourth coupling portion 2121 is coupled to the first coupling portion 1111 of the first body 1 or another third coupling portion (not shown) of another second body (not shown) immediately adjacent to the second body 2. The lateral decoration panel 31 is coupled to the third coupling portion 2111 by aligning the positioning post with the positioning recess of the second body 2 and then engaging the resilient hook with the engaging hole of the second body 2.

Referring to FIG. 9 through FIG. 13, the third coupling portion 2111 is coupled to the second coupling portion 1121 of the first body 1 or the fourth coupling portion 2121 of another second body (not shown) immediately adjacent to the second body 2, whereas the fourth coupling portion 2121 is coupled to another third coupling portion (not shown) of another second body (not shown) immediately adjacent to the second body 2 or the lateral decoration panel 31. The lateral decoration panel 31 is coupled to the fourth coupling portion 2121 by aligning the positioning post with the positioning recess of the second body 2 and then engaging the resilient hook with the engaging hole of the second body 2.

The first transmitting unit 132 is a remote control receiver, a data transmission connector, a memory card slot, an audio video transmission connector, a network transmission connector, or an infrared transceiver.

Referring to FIG. 5 through FIG. 8, a plurality of sixth openings 213 is disposed on the rear side of the second casing 21, whereas the electronic unit 232 comprises a digital antenna 2321 and an audio video transmission connector 2322. The digital antenna 2321 and the audio video transmission connector 2322 are electrically connected to the second processing unit 231. The digital antenna 2321 and the audio video transmission connector 2322 are exposed from the sixth openings 213 of the second casing 21. Hence, the second body 2 of the digital set-top unit of the present invention enables the first body 1 of the digital set-top unit to expand the functionality of a digital TV and enables the first body 1 to exercise exclusive control over the digital set-top unit of the present invention.

Referring to FIG. 9 through FIG. 13, the electronic unit 232 comprises the hard disk drive 2323, and the hard disk drive 2323 is electrically connected to the second processing unit 231. Hence, the second body 2 of the digital set-top unit of the present invention enables the first body 1 of the digital set-top unit to expand and access additional space and enables the first body 1 to exercise exclusive control over the operation of the digital set-top unit of the present invention.

As mentioned above, the second body 2 serves to expand the functionality of a digital TV and access additional space. Furthermore, the second body 2 can expand a network functionality or computer games.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A first body of a digital set-top unit, the first body comprising:
a first casing having a fifth opening, a first coupling side, and a second coupling side, the first coupling side having a first coupling portion and a first opening, and the second coupling side having a second coupling portion and a second opening;
a first expansion circuit substrate disposed in the first casing and having a first electrical connection unit and a second electrical connection unit which are exposed from the first opening and the second opening of the first casing, respectively; and
a first circuit substrate disposed in the first casing, electrically connected to the first expansion circuit substrate, and having a first processing unit and a first transmitting unit, the first processing unit being electrically connected to the first expansion circuit substrate, and the first transmitting unit being electrically connected to the first processing unit and exposed from the fifth opening of the first casing.

2. The first body of claim 1, wherein disassembly recesses are disposed in vicinity of an edge of the first coupling side and in vicinity of an edge of the second coupling side of the first casing.

3. The first body of claim 1, wherein the first coupling side has a first positioning unit, and the second coupling side has a second positioning unit.

4. The first body of claim 1, wherein the first electrical connection unit and the second electrical connection unit are one of a male connector and a female connector.

5. A second body of a digital set-top unit, the second body comprising:
a second casing having a third coupling side and a fourth coupling side, the third coupling side having a third coupling portion and a third opening, and the fourth coupling side having a fourth coupling portion and a fourth opening;
a second expansion circuit substrate disposed in the second casing and having a third electrical connection unit and a fourth electrical connection unit, wherein the third electrical connection unit and the fourth electrical connection unit are exposed from the third opening and the fourth opening of the second casing, respectively; and
a second circuit substrate disposed in the second casing, electrically connected to the second expansion circuit substrate, and having a second processing unit and an electronic unit, the second processing unit being electrically connected to the second expansion circuit substrate, and the electronic unit being electrically connected to the second processing unit.

6. The second body of claim 5, wherein the second casing has a plurality of sixth openings, and the electronic unit has a digital antenna and an audio video transmission connector which are electrically connected to the second processing unit and exposed from the sixth openings of the second casing.

7. The second body of claim 5, wherein the electronic unit has a hard disk drive electrically connected to the second processing unit.

8. The second body of claim 5, wherein disassembly recesses are disposed in vicinity of an edge of the third coupling side and in vicinity of an edge of the fourth coupling side of the second casing.

9. The second body of claim 5, wherein the third electrical connection unit and the fourth electrical connection unit are one of a male connector and a female connector.

10. A digital set-top unit, comprising:
a first body comprising a first casing, a first expansion circuit substrate disposed in the first casing, and a first circuit substrate electrically connected to the first expansion circuit substrate, the first casing having a fifth opening, a first coupling side, and a second coupling side, the first coupling side having a first coupling portion, the second coupling side having a second coupling portion, the first circuit substrate having a first transmitting unit exposed from the fifth opening of the first casing; and
a second body comprising a second casing, a second expansion circuit substrate disposed in the second casing, and a second circuit substrate electrically connected to the second expansion circuit substrate, the second casing having a third coupling side and a fourth coupling side, the third coupling side having a third coupling portion, the fourth coupling side having a fourth coupling portion, thereby allowing the first body and the second body to be coupled together by the first coupling portion, the second coupling portion, the third coupling portion, and the fourth coupling portion.

11. The digital set-top unit of claim 10, wherein the first coupling side is provided with a first opening, the second coupling side with a second opening, the first expansion circuit substrate with a first electrical connection unit and a second electrical connection unit, the first circuit substrate with a first processing unit electrically connected to the first expansion circuit substrate, wherein the first transmitting unit is electrically connected to the first processing unit, wherein the first electrical connection unit and the second electrical connection unit are exposed from the first opening and the second opening of the first casing, respectively.

12. The digital set-top unit of claim 11, wherein the first electrical connection unit and the second electrical connection unit are one of a male connector and a female connector.

13. The digital set-top unit of claim 11, wherein the third coupling side is provided with a third opening, the fourth coupling side with a fourth opening, the second expansion circuit substrate with a third electrical connection unit and a fourth electrical connection unit, the second circuit substrate with a second processing unit and an electronic unit, the second processing unit being electrically connected to the second expansion circuit substrate, and the electronic unit being electrically connected to the second processing unit, wherein the third electrical connection unit and the fourth electrical connection unit are exposed from the third opening and the fourth opening of the second casing, respectively.

14. The digital set-top unit of claim 13, wherein the third electrical connection unit and the fourth electrical connection unit are one of a male connector and a female connector.

15. The digital set-top unit of claim 10, wherein the third coupling portion is coupled to one of the first coupling portion, the second coupling portion, another third coupling portion of another second body immediately adjacent to the second body, and another fourth coupling portion of another second body immediately adjacent to the second body, and the fourth coupling portion is coupled to one of another third coupling portion of another second body immediately adjacent to the second body, and another fourth coupling portion of another second body immediately adjacent to the second body.

16. The digital set-top unit of claim 13, wherein the third electrical connection unit is electrically connected to one of the first electrical connection unit of the first body, the second electrical connection unit of the first body, another third electrical connection unit of another second body immediately adjacent to the second body, and another fourth electrical connection unit of another second body immediately adjacent to the second body, and the fourth electrical connection unit is electrically connected to one of another third electrical connection unit of another second body immediately adjacent to the second body and another fourth electrical connection unit of another second body immediately adjacent to the second body.

17. The digital set-top unit of claim 13 wherein the second casing has a plurality of sixth openings, and the electronic unit has a digital antenna and an audio video transmission connector which are electrically connected to the second processing unit and exposed from the sixth openings of the second casing.

18. The digital set-top unit of claim 10, wherein disassembly recesses are disposed in vicinity of an edge of the first coupling side and in vicinity of an edge of the second coupling side of the first casing, and disassembly recesses are disposed in vicinity of an edge of the third coupling side and in vicinity of an edge of the fourth coupling side of the second casing.

19. The digital set-top unit of claim 10, wherein the first coupling side is provided with a first positioning unit, the second coupling side with a second positioning unit, the third coupling side with a third positioning unit, the fourth coupling side with a fourth positioning unit, and the third positioning unit is engageable with one of the first positioning unit of the first body, the second positioning unit of the first body, another third positioning unit of another second body immediately adjacent to the second body, and another fourth positioning unit of another second body immediately adjacent to the second body, and the fourth positioning unit is engageable with one of another third positioning unit of another second body immediately adjacent to the second body and another fourth positioning unit of another second body immediately adjacent to the second body.
